# EUROPEAN PATENT APPLICATION

(11) **EP 4 651 069 A1**
(43) Date of publication of application: **19.11.2025**
(21) Application number: 23916304.1
(22) Date of filing: 27.12.2023
(51) Int. Cl.: G06Q 50/18

(54) **INFORMATION PROCESSING DEVICE, METHOD, AND PROGRAM**

(30) Priority: 10.01.2023 JP 2023001531
(71) Applicant: FUJIFILM Corporation, Tokyo 106-8620 (JP)
(72) Inventor: HASEGAWA Yoichi, Ashigarakami-gun, Kanagawa 258-8577 (JP)
(74) Representative: Klunker IP Patentanwälte PartG mbB
(86) International application number: PCT/JP2023/047046
(87) International publication number: WO 2024/150691

(57) **Abstract**

Provided are an information processing apparatus, a method, and a program that can provide argument case information serving as a reference for measures in a procedure for acquiring a right of an application relating to an intellectual property right. A processor included in an information processing apparatus (10) receives person-in-charge information of a person in charge who has performed examination of a certain application, person-in-charge information for specifying a person in charge who has performed examination of an application relating to an intellectual property right for which a notice of rejection has been received, or identification information for specifying the application relating to the intellectual property right for which the notice of rejection has been received, extracts the person-in-charge information for specifying the person in charge who has performed examination of the application relating to the intellectual property right for which the notice of rejection has been received based on the identification information in a case where the identification information has been received, and generates argument case information related to a specific application that has been granted only by argument without amendment or correction of translation errors for a notice of reasons for rejection immediately before the grant among past applications for which the person in charge has performed examination based on the person-in-charge information.

## Description

### BACKGROUND OF THE INVENTION

### 1. Field of the Invention

The present invention relates to an information processing apparatus, a method, and a program, and particularly relates to a technique for enabling acquisition of information on an application relating to a desired intellectual property right.

### 2. Description of the Related Art

In the related art, an apparatus for supporting evaluation and creation work of a newly created patent specification has been proposed (JP2010-224984A).

The apparatus described in JP2010-224984A comprises a data creation unit and a database search subsystem of reasons for rejection. The data creation unit searches for and analyzes a notice of reasons for rejection from a patent examination database, and then creates information in which a description or reference information regarding a Japanese unexamined patent application publication of an object for examination that has been rejected, reasons for rejection against the Japanese unexamined patent application publication of the object for examination, and a description or reference information in references cited in the reasons for rejection are associated with each other. In addition, the database search subsystem of reasons for rejection inputs a new patent specification, performs a similarity search on the reasons for rejection database that stores information created by the data creation unit using the description in the claims of the new patent specification as a key, estimates a description range in the new patent specification similar to the information on the record searched from the reasons for rejection database, and presents the description range together with the information on the searched record.

In addition, the data creation unit searches for and analyzes a written argument associated with the notice of reasons for rejection from the patent examination database, creates information by further associating descriptions or reference information regarding the content of the argument or the amendment against the reasons for rejection with the information associated with the notice of reasons for rejection, and stores the created information in the reasons for rejection database.

According to the apparatus described in JP2010-224984A, it is possible to appropriately estimate the pointed-out unit in the specification in the notice of reasons for rejection expected for the new patent specification by processing based on the pointed-out unit described in the notice of reasons for rejection in the past. In addition, by presenting the search result of the reasons for rejection database for the estimated pointed-out unit, it is possible to present useful information to the user in the examination work or the correction work for the input new patent specification. As a result, by knowing how the description in the known example similar to the pointed-out description is amended and registered, it is possible to easily make an appropriate correction of the pointed-out portion in the new patent specification.

### SUMMARY OF THE INVENTION

However, even in a case where a patent application is filed with a new patent specification created in consideration of the expected notice of reasons for rejection, a notice of reasons for rejection is likely to be issued in actual examination at the patent office.

It is desirable for the applicant to acquire rights in a wide range without amendment in a case of a procedure for acquiring a right. However, as a measure to overcome the reasons for rejection and aim for grant, the scope of claims is amended.

In a case where the amendment is not made in the response to the reasons for rejection, there is a possibility of receiving a final rejection. Furthermore, in a case where the amendment is not made at the time of the trial for appeal against the decision of final rejection after the final rejection has been received, an appeal decision of rejection may be delivered. In a case where the applicant still has request for appeal against the decision, the applicant needs to appeal to the high court. Therefore, among the parties (applicant or patent law firm) in the industry related to the intellectual property right, it is substantially common sense to make amendment in the response to the reasons for rejection.

However, in a case where the scope of the claims is amended in consideration of the above procedure, even in a case where the right is acquired, the scope is narrowed, and the applicant may suffer a great loss. The same applies to other intellectual property rights (for example, utility model grant application, design application, and trademark application).

The present invention has been made in view of such circumstances, and an object of the present invention is to provide an information processing apparatus, a method, and a program that provides argument case information serving as a reference for measures in a procedure for acquiring a right of an application relating to an intellectual property right.

An invention according to a first aspect is an information processing apparatus comprising a processor, in which the processor receives person-in-charge information of a person in charge who has performed examination of a certain application, person-in-charge information for specifying a person in charge who has performed examination of an application relating to an intellectual property right for which a notice of rejection has been received, or identification information for specifying the application relating to the intellectual property right for which the notice of rejection has been received, extracts the person-in-charge information for specifying the person in charge who has performed examination of the application relating to the intellectual property right for which the notice of rejection has been received based on the identification information in a case where the identification information has been received, and generates argument case information related to a specific application that has been granted only by argument without amendment or correction of translation errors for a notice of reasons for rejection immediately before the grant among past applications for which the person in charge has performed examination based on the person-in-charge information.

In the information processing apparatus according to a second aspect of the present invention, the argument case information includes at least one piece of information of past identification information including at least one of an application number, a publication number, or a patent number, argument information, withdrawn reasons for rejection information, or link information to information in which progress information of the past applications is accessible.

In the information processing apparatus according to a third aspect of the present invention, the processor creates a summary of argument from the argument information.

In the information processing apparatus according to a fourth aspect of the present invention, the processor outputs the argument case information.

In the information processing apparatus according to a fifth aspect of the present invention, the processor specifies the specific application from progress information of the past applications.

An invention according to a sixth aspect is an information processing method executed by an information processing apparatus including a processor, the information processing method comprising: via the processor, receiving person-in-charge information of a person in charge who has performed examination of a certain application, person-in-charge information for specifying a person in charge who has performed examination of an application relating to an intellectual property right for which a notice of rejection has been received, or identification information for specifying the application relating to the intellectual property right for which the notice of rejection has been received, extracting the person-in-charge information for specifying the person in charge who has performed examination of the application relating to the intellectual property right for which the notice of rejection has been received based on the identification information in a case where the identification information has been received, and generating argument case information related to a specific application that has been granted only by argument without amendment or correction of translation errors for a notice of reasons for rejection immediately before the grant among past applications for which the person in charge has performed examination based on the person-in-charge information.

An invention according to a seventh aspect is an information processing program for causing a computer to execute the information processing method according to the sixth aspect.

According to the present invention, in the procedure for acquiring the right of the application relating to the intellectual property right, the argument case information that serves as a reference for the measures can be provided.

### BRIEF DESCRIPTION OF THE DRAWINGS

Fig. 1 is a diagram showing a system configuration including an information processing apparatus according to an embodiment.
Fig. 2 is a block diagram showing an embodiment of a hardware configuration of the information processing apparatus according to the embodiment.
Fig. 3 is a block diagram showing an embodiment of a functional configuration of the information processing apparatus according to the embodiment.
Fig. 4 is a flowchart showing an example of an information processing method according to the embodiment.
Fig. 5 is a diagram showing an example of a notice of reasons for rejection notified from the Japan Patent Office.
Fig. 6 is a diagram showing an example of a worksheet output from the patent management system.
Fig. 7A and 7B are diagrams for describing a method of extracting person-in-charge information from identification information.
Fig. 8A and 8B are diagrams for describing an example of a method of extracting a specific application.
Fig. 9 is a diagram for describing an example of argument case information.
Fig. 10 is a diagram showing another example of the worksheet output from the patent management system.
Fig. 11 is a diagram showing an example of a written argument.
Fig. 12 is a diagram showing another argument case information.

### DESCRIPTION OF THE PREFERRED EMBODIMENTS

Hereinafter, preferred embodiments of an information processing apparatus, a method, and a program for an application relating to an intellectual property right according to the present invention will be described with reference to the accompanying drawings.

### [System Configuration including Information Processing Apparatus]

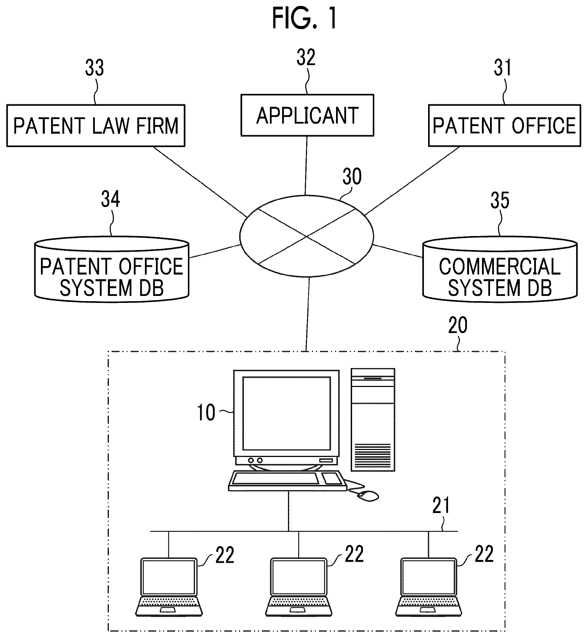

Fig. 1 is a diagram showing a system configuration including an information processing apparatus according to an embodiment.

An information processing apparatus 10 of the application related to the intellectual property right shown in Fig. 1 is configured with, for example, a personal computer, a workstation, a server, or the like, and is connected to a network 30. The information processing apparatus 10 may be disposed in a local area network (LAN) 21 of an organization 20 in which the information processing apparatus 10 is disposed. In addition, the information processing apparatus 10 may be connected to another information processing apparatus belonging to the organization 20, for example, the personal computer 22 via the LAN 21.

The information processing apparatus 10 is connected to an information processing apparatus (for example, a server) outside the organization 20 via the network 30. The external information processing apparatus includes, for example, a patent office 31, an applicant 32, a patent law firm 33, a patent office system database (DB) 34, and a commercial system DB 35.

The patent office 31 is an organization that examines applications relating to intellectual property rights in each country or region, and includes the Japan Patent Office (JPO), the United States Patent and Trademark Office (USPTO), the European Patent Office (EPO), the World Intellectual Property Organization (WIPO), and the like. The server of each patent office 31 is connected to the network 30.

The applicant 32 is an individual or a corporation that files an application in order to acquire a right related to an intellectual property right, and is a person who can be a right holder after grant. A server owned by the applicant 32 is connected to the network 30.

The patent law firm 33 performs a procedure of the patent office 31 in response to a request of the applicant 32, and includes a Japanese patent law firm, a US patent law firm, and the like. A server of the patent law firm 33 is connected to the network 30.

In Fig. 1, the organization 20 is shown independently of the applicant 32 and the patent law firm 33, but the applicant 32 and the patent law firm 33 can also serve as the organization 20. That is, the applicant 32 and the patent law firm 33 can have the information processing apparatus 10.

The patent office system DB 34 and the commercial system DB 35 are a collection of data that manages and accumulates various types of information related to the application and grant of the intellectual property right in a searchable manner. The patent office system DB 34 and the commercial system DB 35 accumulate publication information on patents, utility models, designs, trademarks, and appeal decision, information on legal status such as procedures and examination progress, and the like, and provide a search and browsing service for information on applications relating to intellectual property rights.

Examples of the patent office system DB 34 include a patent information platform (J-PlatPat) and a patent information acquisition application programming interface (API) which are search services provided by the Japan Patent Office, Espacenet which is a search service provided by the European Patent Office, and PATENTSCOPE which is a search service provided by the World Intellectual Property Organization (WIPO).

In addition, examples of the commercial system DB 35 include Sharereserch which is a patent search service provided by Hitachi, Ltd., and JP-NET which is a patent search system provided by Japan Patent Data Service Co., Ltd.

### [Hardware Configuration of Information Processing Apparatus]

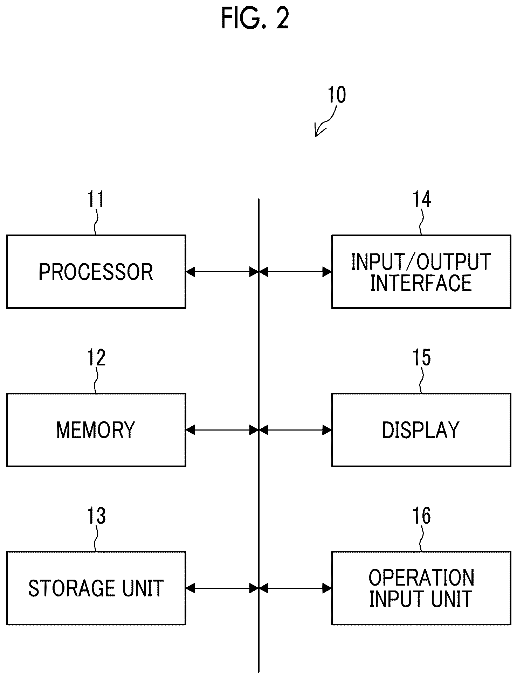

Fig. 2 is a block diagram showing a hardware configuration of the information processing apparatus for the application relating to the intellectual property right according to the embodiment.

The information processing apparatus 10 shown in Fig. 2 receives person-in-charge information of a person in charge who has performed examination of a certain application, person-in-charge information for specifying a person in charge who has performed examination of an application relating to an intellectual property right for which a notice of rejection has been received, or identification information for specifying the application, extracts the person-in-charge information for specifying the person in charge who has performed examination of the application relating to the intellectual property right for which the notice of rejection has been received based on the identification information in a case where the identification information has been received, and generates argument case information related to a specific application that has been granted only by argument without amendment or correction of translation errors for a notice of reasons for rejection immediately before the grant among past applications for which the person in charge has performed examination based on the person-in-charge information.

The information processing apparatus 10 according to the embodiment mainly comprises a processor 11, a memory 12, a storage unit 13, an input/output interface 14, a display 15, an operation input unit 16, and the like.

The processor 11 is configured with a central processing unit (CPU) or the like, functions as a processing unit that performs various types of processing, and controls the information processing apparatus 10 in an integrated manner. The processor 11 executes an information processing program for an application related to an intellectual property right to generate argument case information related to a specific application that is granted only by argument without amendment desired by the user, which will be described later. The information processing program according to the present application includes a program created as application software in cooperation with spreadsheet software (for example, Excel (registered trademark)) and a program that causes the processor 11 to execute processing alone without cooperating with the spreadsheet software. The user is an applicant who is mainly a party involved in the industry related to the intellectual property right, a patent law firm or the like.

The memory 12 includes a flash memory, a read-only memory (ROM), a random access memory (RAM), and the like. The flash memory and the ROM can store various programs including an operating system and an information processing program for an application relating to an intellectual property right (hereinafter, simply referred to as an "information processing program"). The RAM functions as a work area of processing performed by the processor 11 and temporarily stores the information processing program and the like stored in the flash memory or the like. It should be noted that a part (RAM) of the memory 12 may be built in the processor 11.

The storage unit 13 is configured with a non-transitory recording medium such as a hard disk drive (HDD) and a solid state drive (SSD), and a control unit thereof. The storage unit 13 can store various information processing programs, application software, and the like necessary for causing the information processing apparatus 10 to function, and can store data acquired by the information processing apparatus 10, information generated by processing the data by the information processing apparatus 10, and the like.

The input/output interface 14 is configured to cause the information processing apparatus 10 to input and output various data or information, and connect the information processing apparatus 10 to an external device, the LAN 21, the network 30, and the like. A universal serial bus (USB), a high-definition multimedia interface (HDMI) (HDMI is a registered trademark), or the like can be applied as the connection unit that can be connected to the external device.

The display 15 is, for example, a display device such as a liquid crystal display or an organic EL display. The display 15 displays a processing result of the information processing apparatus 10, an input screen for facilitating input from the operation input unit 16, an input result, and the like under the control of the processor 11.

The operation input unit 16 includes a keyboard and a mouse, and the user can cause the information processing apparatus 10 to perform necessary processing via the operation input unit 16, and the operation input unit 16 functions as a user interface that receives various instruction inputs. By using a touch panel type device, the display 15 and the operation input unit 16 can be used together.

### [Functional Configuration of Information Processing Apparatus]

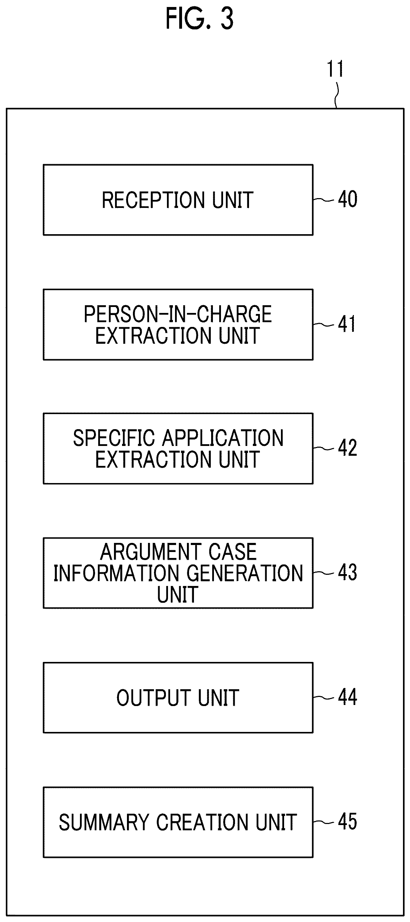

Fig. 3 is a block diagram showing a function of the processor 11. The processor 11 comprises a reception unit 40, a person-in-charge extraction unit 41, a specific application extraction unit 42, an argument case information generation unit 43, an output unit 44, a summary creation unit 45, and the like. Each of these functions is implemented by an information processing program, application software, or a combination of an information processing program and application software. Each function will be briefly described.

The reception unit 40 receives person-in-charge information of a person in charge who has performed examination of a certain application, person-in-charge information for specifying a person in charge who has performed examination of an application relating to an intellectual property right for which a notice of rejection has been received, or identification information for specifying the application relating to the intellectual property right for which the notice of rejection has been received.

In a case where the reception unit 40 receives only the identification information, the person-in-charge extraction unit 41 extracts person-in-charge information for specifying the person in charge who issued a notice of rejection against the application related to the identification information. The person-in-charge extraction unit 41 may access the patent office system DB 34 and the commercial system DB 35 via the network 30, perform a search based on the identification information, and extract at least the person-in-charge information from the data related to the corresponding application.

The specific application extraction unit 42 accesses, for example, the patent office system DB 34 and the commercial system DB 35 via the network 30, and extracts the specific application that is granted only by argument without amendment or correction of translation errors from the past applications for which the person in charge has performed the examination, based on the person-in-charge information received by the reception unit 40 or the person-in-charge information extracted by the person-in-charge extraction unit 41.

The argument case information generation unit 43 generates argument case information related to the specific application from the data extracted by the specific application extraction unit 42. The argument case information can include at least one piece of information of past identification information including at least one of an application number, a publication number, or a patent number, argument information, withdrawn reasons for rejection information, or link information to information in which progress information of the past applications is accessible. The argument case information includes character information that can be recognized by the user.

The output unit 44 can output the argument case information in, for example, a format of a display 15, a printing device (not shown), or electronic data (text data or the like). In a case where the image is output to the display 15, the user can check and operate the image on the display 15. The image may be output to paper by a printing device. In a case where the data is output as electronic data, the data can be processed by application software. The electronic data can be shared by a plurality of persons.

In a case where the argument case information generated by the argument case information generation unit 43 includes the argument information, the summary creation unit 45 creates the summary of argument from the argument information. The summary creation unit 45 can create a summary of argument by extracting the character string information including the specific character string information designated by the user from the argument information. In addition, by using a learning model trained with the summary of argument created by the user as the training data, the summary creation unit 45 can create the summary of argument from the argument information. However, as long as the summary of argument can be created from the argument information, the present invention is not limited to these methods.

### [Processing Flow of Information Processing Method]

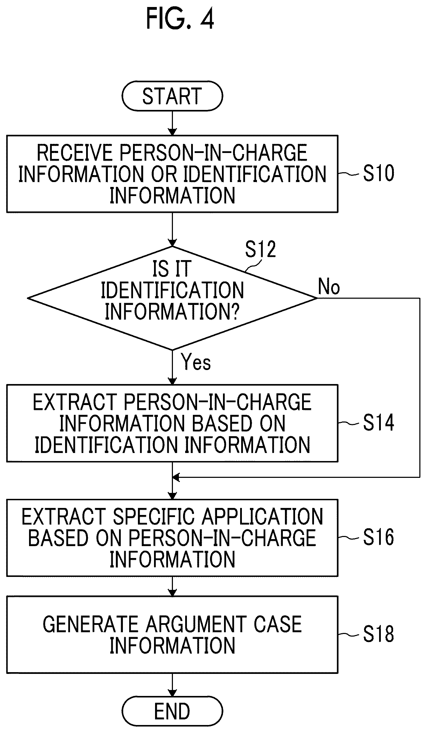

Fig. 4 is a flowchart showing an information processing method according to the embodiment, and shows a processing procedure by the processor 11 of the information processing apparatus 10. The information processing method comprises a step of receiving the person-in-charge information or the identification information (step S10), a step of determining whether the received information is the identification information (step S12), a step of extracting the person-in-charge information based on the identification information (step S14), a step of extracting the specific application based on the person-in-charge information (step S16), and a step of generating the argument case information (step S18).

In the information processing method of the embodiment shown in Fig. 4, the step of receiving the person-in-charge information or the identification information (step S10) is performed. Here, the person-in-charge information is information for specifying a person in charge who has performed the examination of a certain application or a person in charge who has performed the examination of an application relating to an intellectual property right for which has received a notice of rejection, and is, for example, a name of the person in charge or an identification code for specifying the person in charge. The person in charge is an examiner or a trial examiner of the patent office. In addition, the identification information is information for specifying the application relating to the intellectual property right for which the notice of rejection has been received, and is, for example, an application number or a publication number. The notice of rejection is a document that clearly states the reason why the application cannot be granted, and the name of the document is not limited to a notice of reasons for rejection, a final rejection, or the like.

Before step S10 of receiving the information on person in charge who has performed examination of an application relating to an intellectual property right for which a notice of rejection has been received, or the identification information, the notice of reasons for rejection is notified from the patent office for the application relating to the intellectual property right.

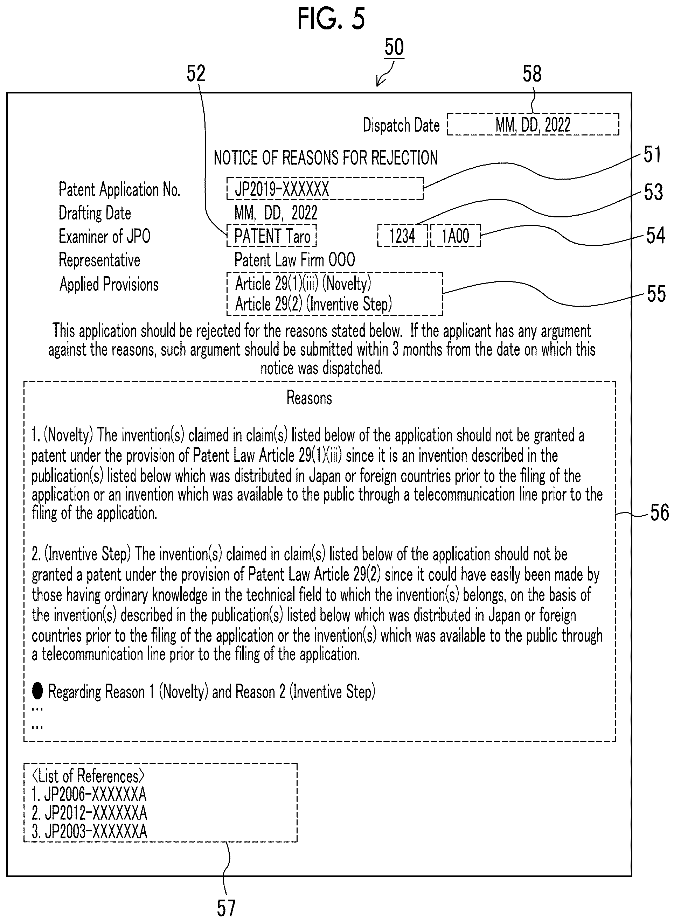

Fig. 5 shows an example of a notice of reasons for rejection notified from the Japan Patent Office. The notice of reasons for rejection 50 shown in Fig. 5 includes various types of information such as an application number 51 as identification information for specifying the application, an examiner name 52 of a person in charge (here, an examiner) who performs the examination, an examiner code 53 for specifying the person in charge, an organization code 54 indicating an organization to which the person in charge belongs, an applied provisions 55 which is applied, reasons for rejection 56, a reference 57 which is cited, and a dispatch date 58. The notice of reasons for rejection 50 is transmitted from the patent office 31 to the patent law firm 33 or the applicant 32 in a form of electronic data via the network 30. The notice of reasons for rejection 50 transmitted to the patent law firm 33 is transmitted from the patent law firm 33 to the applicant 32 via the network 30.

In step S10 of receiving the person-in-charge information or the identification information, specifically, the examiner name 52, the examiner code 53, or the application number 51 of the notice of reasons for rejection 50 is input to the information processing apparatus 10. The reception unit 40 of the processor 11 receives the examiner name 52, the examiner code 53, or the application number 51. The examiner name 52 or the examiner code 53 corresponds to an example of the person-in-charge information for specifying the person in charge of the present invention.

The information on the examiner name 52, the examiner code 53, or the application number 51 can be input to the information processing apparatus 10 via the operation input unit 16. In addition, as another method, in a case where the notice of reasons for rejection 50 is in the form of electronic data, the notice of reasons for rejection 50 can be automatically generated.

In a case where the applicant 32 and the organization 20 are the same, the applicant 32 can link the patent management system (not shown) maintained and managed by the applicant 32 with the information processing apparatus 10.

In a case where the notice of reasons for rejection 50 is transmitted to the applicant 32, information related to the notice of reasons for rejection 50 is input to the patent management system maintained and managed by the applicant 32. The target case is extracted from the patent management system by being searched based on "JP2019-××××××" which is the application number 51. "MM, DD, 2022" which is the dispatch date 58, "Patent Taro" which is the examiner name 52, "1234" which is the examiner code 53, "1A00" which is the organization code 54, "novelty, inventive step" which is the applied provisions 55, and the like are input to the patent management system, and the information of the notice of reasons for rejection 50 is stored in the patent management system in association with the extracted target case (application number 51). In a case where the notice of reasons for rejection 50 is in the form of electronic data, it is possible to automatically input information related to the notice of reasons for rejection 50 to the patent management system.

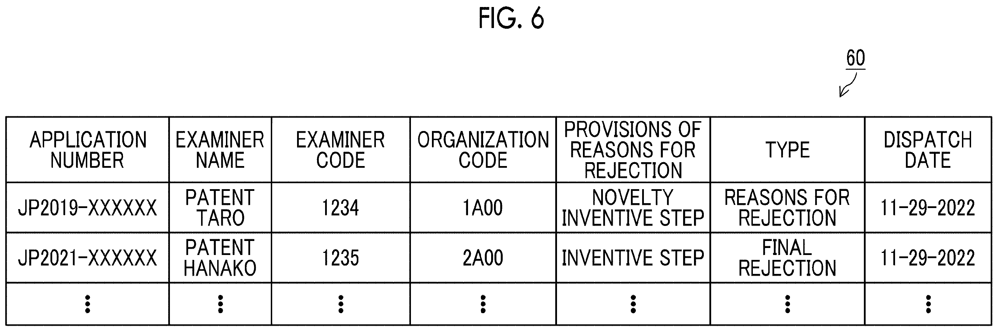

The information stored in the patent management system can be output in a data format such as comma separated values (CSV). Fig. 6 shows an example of the output CSV format worksheet 60. A worksheet 60 shown in Fig. 6 is configured of cells divided in a lattice shape, cells arranged in a vertical direction are "columns" of the worksheet 60, and cells arranged in a horizontal direction are "rows" of the worksheet 60. In the worksheet 60, an application number is assigned to the first column, an examiner name is assigned to the second column, a person-in-charge code is assigned to the third column, an organization code is assigned to the fourth column, provisions of reasons for rejection are assigned to the fifth column, a type is assigned to the sixth column, and a dispatch date is assigned to the seventh column. In the worksheet 60, cases with the same dispatch date and different application numbers are simultaneously shown. The worksheet 60 is not limited to this item and order.

In step S10 of receiving the person-in-charge information or the identification information, the examiner name 52, the examiner code 53, or the application number 51 stored in the patent management system is input to the information processing apparatus 10, and the reception unit 40 receives the examiner name 52, the examiner code 53, or the application number 51. The input to the information processing apparatus 10 may be automatically performed from the patent management system, or may be manually performed by the user from the operation input unit 16 based on the worksheet 60.

Next, a step (step S12) of determining whether the received information is the identification information is performed. Specifically, the person-in-charge extraction unit 41 of the processor 11 determines whether the received information is identification information. In step S12, in a case where the person-in-charge extraction unit 41 determines that the received information is only the identification information (application number 51) (in a case of Yes determination), the process proceeds to a step (step S14) of extracting the person-in-charge information based on the identification information. On the other hand, in a case where the person-in-charge extraction unit 41 determines that the received information includes at least the examiner name 52 or the examiner code 53 (in a case of No determination), the process proceeds to a step (step S16) of extracting the specific application based on the person-in-charge information. Whether the received information is identification information is synonymous with whether the received information includes the person-in-charge information. In a case where the identification information includes the person-in-charge information, the determination result is No, and in a case where the identification information does not include the person-in-charge information, the determination result is Yes.

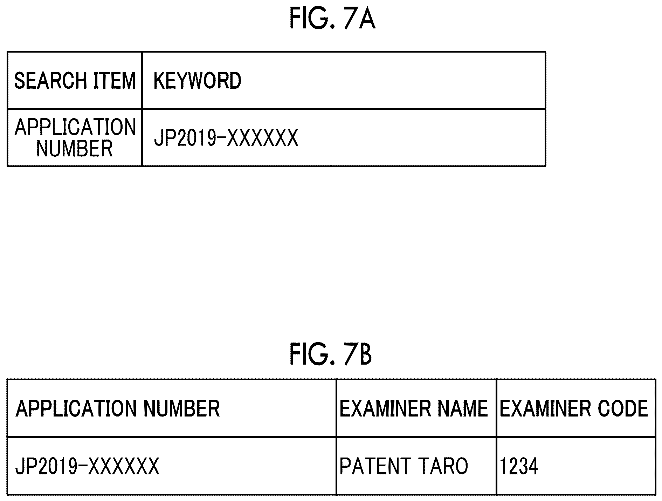

Next, in a case where the determination result in step S12 is Yes, a step of extracting the person-in-charge information based on the identification information (step S14) is performed. Specifically, the person-in-charge extraction unit 41 extracts the person-in-charge information from the patent office system DB 34 or the commercial system DB 35 via the network 30 based on the identification information (application number 51) received by the reception unit 40. As shown in Fig. 7A, "JP2019-××××××" is automatically or manually input as a keyword of a search item (here, a patent application) using a search system of the patent office system DB 34 or the commercial system DB 35. Next, the search system executes the search.

As shown in Fig. 7B, a case in which the application number is JP2019-×××××× is searched for. The examiner name or the examiner code of the examiner who has performed the examination on JP2019-×××××× is extracted as the person-in-charge information together with the application number. The reception unit 40 receives the extracted information as the person-in-charge information.

Next, a step of extracting the specific application based on the person-in-charge information (step S16) is performed. Specifically, the specific application extraction unit 42 of the processor 11 extracts the specific application from the patent office system DB 34 or the commercial system DB 35 via the network 30 based on the person-in-charge information (examiner name 52 or examiner code 53). Here, the specific application is an application that is granted only by argument without amendment or correction of translation errors among past applications for which the person in charge (examiner or trial examiner) has performed the examination. In order to enable the person in charge by himself/herself to understand the argument recognized by the person in charge in the past, it is more preferable to extract a past application for which the person in charge has performed the decision to grant or the appeal decision of grant as the specific application. In order to enable the person in charge by himself/herself to understand the argument that the person in charge has determined to recognize, it is more preferable to extract the past applications for which the person in charge has performed the decision to grant as the specific application. The application that is granted only by argument without amendment or correction of translation errors is an application in which amendment is not made between the finally notified reasons for rejection and the decision to grant.

The extracted applications may include the following Examples 1 to 3.
Example 1: This is an application that is granted by amendment in which a dependent claim for which a rejection has been notified is added to an independent claim and by arguing against the independent claim after the amendment.
Example 2: This is an application for which a new reason for rejection with a substituted prior art document is issued by arguing against the independent claim without amendment or correction of translation errors in a case where the reasons for rejection (for example, novelty or inventive step) based on the prior art document is issued. This application corresponds to a case where the reasons for rejection against the independent claim has been overcome only by the argument.
Example 3: This is an application that is granted by arguing that the invention is patentable by amending the independent claim based on the specification and the drawings, without limiting to the allowable claim in a case where a reasons for rejection has been issued for the independent claim but there is an allowable claim.

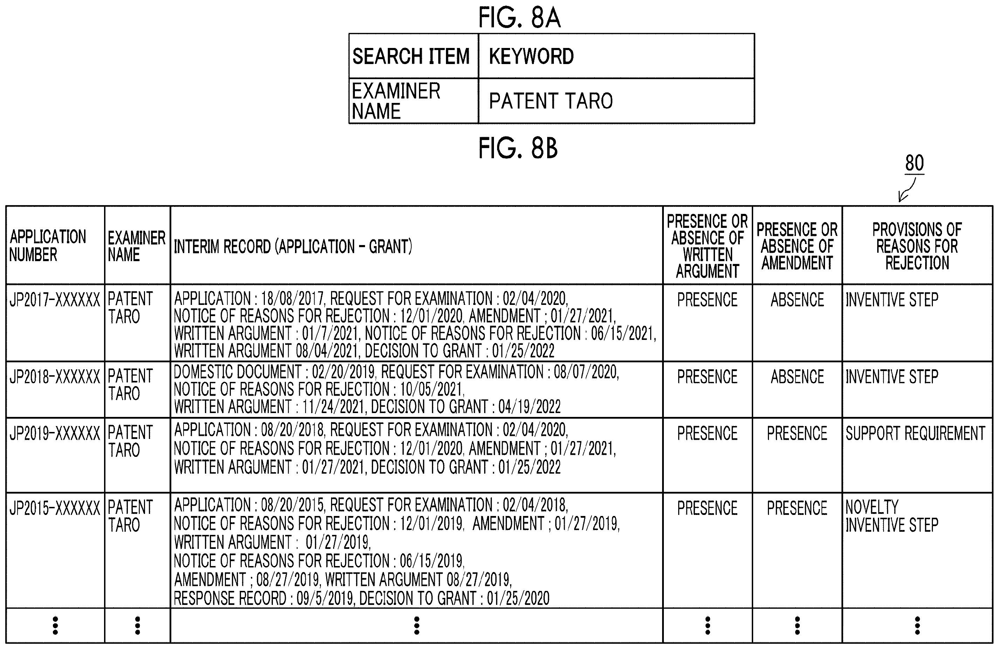

An example of the method of extracting the specific application will be described. As shown in Fig. 8A, "Patent Taro" is automatically or manually input as a keyword of a search item (here, examiner name) using the search system of the patent office database DB 34 or the commercial system DB 35. Next, the search system executes the search. The examiner name 52 "Patent Taro" corresponds to an example of the person-in-charge information. The examiner code 53 may be set as a search item instead of the examiner name 52, and "1234" may be automatically or manually input as a keyword.

As shown in Fig. 8B, all the applications in which the examiner name 52 of which the examiner has performed the examination is "Patent Taro" are extracted. These applications correspond to past applications that have been examined by the person in charge of the present invention. Among the past applications, the application that is granted is the main target of the past applications. In Fig. 8B, the past application is extracted in the format of the worksheet 80 and can be read into spreadsheet software.

The worksheet 80 includes items of "application number", "examiner name", "interim record (application-grant)", "presence or absence of written argument", "presence or absence of amendment", and "provisions of reasons for rejection". The "application number", "examiner name", "interim record (application-grant)", and "provisions of reasons for rejection" can be acquired as character string information from the patent office database DB 34 or the commercial system DB 35. The "interim record (application-grant)" includes progress information of the procedure exchanged between the patent office and the applicant, and information in chronological order (the order of occurrence of each progress information or the date, month, and year of the procedure).

In "application number" of the first row of the worksheet 80, "JP2017-××××××" includes "application: 2017/08/18, request for examination: 2020/02/04, notice of reasons for rejection: 2020/12/01, amendment; 2021/01/27, written argument: 2021/01/27, notice of reasons for rejection: 2021/06/15, written argument 2021/08/04, and decision to grant: 2022/01/25" as "interim record (application - grant)".

In addition, in "application number" of the fourth row from the top of the worksheet 80, "JP2015-××××××" includes "application: JP2015/08/20, request for examination: 2018/02/04, notice of reasons for rejection: 2019/12/01, amendment; 2019/01/27, written argument: 2019/01/27, notice of reasons for rejection: 2019/06/15, amendment; 2019/08/27, written argument 2019/08/27, response record: 2019/09/5, and decision to grant: 2020/01/25" as "interim record (application - grant)".

The item of "presence or absence of written argument" is devised to be able to automatically determine whether there is a written argument between the last notified notice of reasons for rejection and the decision to grant from the character string of the progress information described in "interim record (application - grant)". In addition, the item of "presence or absence of amendment" is devised to be able to automatically determine whether there is an amendment between the last notified notice of reasons for rejection and the decision to grant from the character string of the progress information described in "interim record (application-grant)". These measures can be realized by, for example, a function of spreadsheet software, a macro function, or the like. In addition, the information processing program may be an information processing program described in another programming language.

As shown in the worksheet 80, for the application with the "application number" of "JP2017-××××××", specifically, "interim record (application-grant)" is described as "...notice of reasons for rejection: 2021/06/15, written argument 2021/08/04, decision to grant: 2022/01/25". That is, the written argument has been submitted between the last notified notice of reasons for rejection and the decision to grant, but the amendment is not submitted. Then, "presence or absence of written argument" is displayed as "presence" and "presence or absence of amendment" is displayed as "absence". Meanwhile, in the application with the "application number" of "JP2015-××××××", specifically, "interim record (application-grant)" is described as "notice of reasons for rejection: 2019/06/15, amendment; 2019/08/27, written argument 2019/08/27, response record: 2019/09/5, decision to grant: 2020/01/25". That is, an amendment and a written argument are submitted between the last notified notice of reasons for rejection and the decision to grant. Then, "presence or absence of written argument" is displayed as "presence" and "presence or absence of amendment" is displayed as "presence". The presence or absence of the written argument and the presence or absence of the amendment are described as "presence" and "absence", but for example, "presence" may be displayed as "1" and "absence" may be displayed as "0". A specific application in which an application satisfying the conditions that "presence or absence of written argument" is "presence" and "presence or absence of amendment" is "absence" is granted only by argument without amendment. In a case where the search is performed using the examiner name, there may be a case where no past application or specific application is extracted. In that case, the past application corresponding to the organization code may be extracted from the patent office system DB 34 or the commercial system DB 35 based on the organization code to which the examiner who has performed the examination belongs, and the specific application may be specified from the past applications. The user can refer to the argument information in the specific application examined by other examiners belonging to the same organization.

Next, a step of generating the argument case information (step S18) is performed. Specifically, the argument case information generation unit 43 of the processor 11 generates the argument case information related to the specific application based on the information on the specific application extracted by the specific application extraction unit 42. In a case where the specific application can be specified, by checking the content of the specific application, the user can easily know the concept of the argument (the logic of the argument), the terms effective for the argument, and the like, for which the grant is allowed only by the argument without amendment. That is, the user can acquire the argument case information that serves as a reference for the measures.

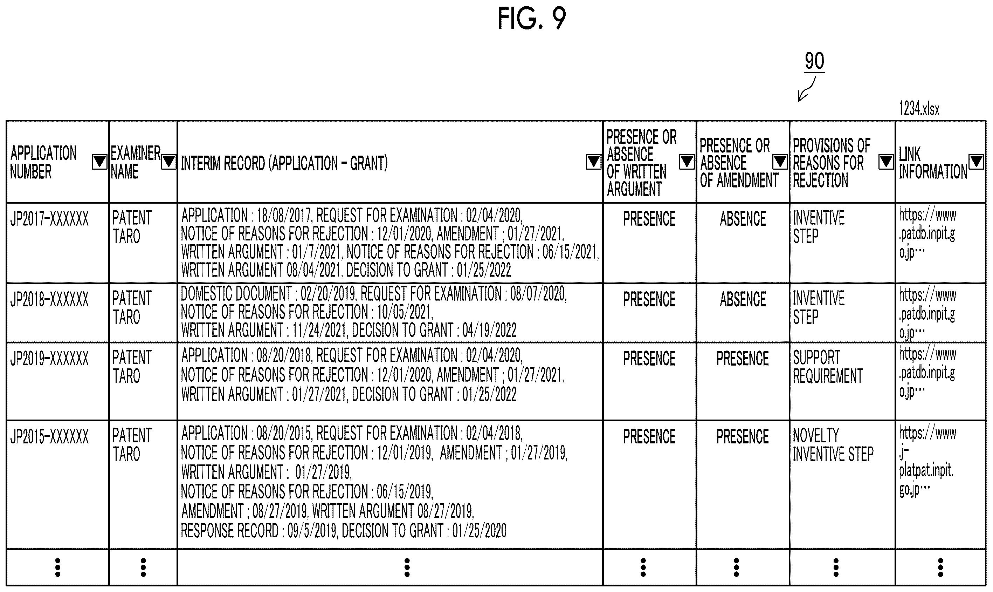

In a case where the specific application extraction unit 42 is created in the format of the worksheet 80, information including items of "application number", "examiner name", "interim record (application-grant)", "presence or absence of written argument", "presence or absence of amendment", and "provisions of reasons for rejection" can be generated as argument case information 90 shown in Fig. 9 in a file format of spreadsheet software. The argument case information 90 in a file format of spreadsheet software is an example of the argument case information of the present invention. The argument case information is not particularly limited to data format as long as it is in a format that can be used by the user.

Here, JP2017-×××××× is an example of past identification information of the present invention described in the item of "application number". Instead of the application number, the publication number or the patent number may be used, and these numbers are examples of the past identification information of the present invention. "inventive step" and "support requirement" described in the item of "provisions of reasons for rejection" are examples of the withdrawn reasons for rejection information of the present invention. The reasons for rejection information is not limited to these, and may include "novelty" and "clarity". Further, the argument case information 90 has an item of "link information", and the "link information" describes a uniform resource locator (URL) that can directly access the information on the application from the patent office system DB 34 or the commercial system DB 35. This URL is an example of the link information to information in which the progress information of the past application in the present invention can be accessible. It should be noted that the URL does not have to be a URL that can directly access the information on the application.

The argument case information 90 may include information related to the specific application that is granted only by the argument without amendment in the past applications for which the person in charge has performed the examination, and may include the past applications other than the specific application. The argument case information 90 may be generated in a state in which the specific application can be recognized. For example, the argument case information 90 may be generated by including only the specific application, may be expressed in a different color, font, or the like only for the specific application, or may include an item (flag for grouping the specific application and the applications other than the specific application) that can distinguish the specific application from the applications other than the specific application. By combining the items of "presence or absence of written argument" and "presence or absence of amendment" described above, the specific application and the applications other than the specific application can be grouped. In order to enable the person in charge by himself/herself to understand the argument recognized by the person in charge in the past, it is more preferable to particularly highlight the past application for which the person in charge has performed the decision to grant or the appeal decision of grant. In order to enable the person in charge by himself/herself to understand the argument that the person in charge has determined to recognize, it is more preferable to particularly highlight the past applications for which the person in charge has performed the decision to grant.

The output unit 44 of the processor 11 can output the argument case information 90 to the storage unit 13 in a form of electronic data (for example, a file format of spreadsheet software) and can output the argument case information 90 to the display 15. The argument case information 90 can also be output to paper by a printing device.

The argument case information 90 output in a form of electronic data may be denoted by a specific file name (for example, in a case of a file format of spreadsheet software, "1234.xlsx" or the like by using "1234" which is an examiner code) and stored in the storage unit 13 of the information processing apparatus 10. In a case where the storage location of the storage unit 13 is specified, the user can freely access the argument case information 90 stored in the storage unit 13.

In a case where the argument case information 90 is output to the display 15, the user can obtain necessary information via the operation input unit 16. For example, in a case of specifying the specific application in the argument case information 90 (in a case of a file format of spreadsheet software), by using the filter function of the spreadsheet software, only the specific application satisfying the condition that "presence or absence of written argument" is "presence" and "presence or absence of amendment" is "absence" can be displayed. In addition, by using a macro function of spreadsheet software, only the specific application can be displayed, only the font of the specific application can be changed, or only the specific application can be colored. In a case where the argument case information 90 is stored in the storage unit 13, the argument case information 90 can be read and displayed on the display 15, and only the specific application can be displayed for the argument case information 90 via the operation input unit 16.

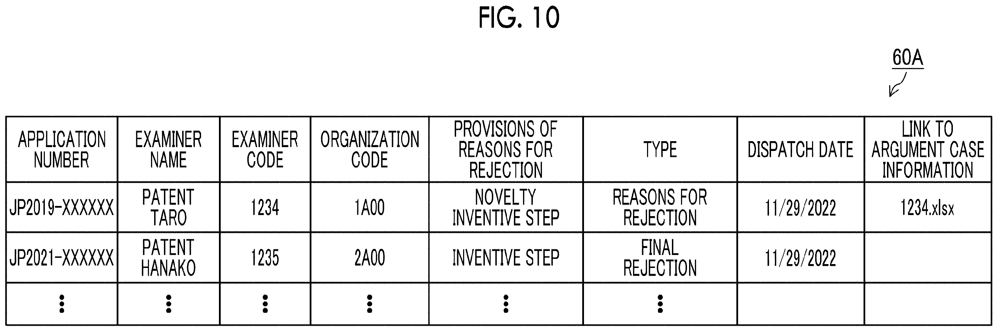

In addition, the information processing apparatus 10 can use the worksheet 60 generated by the patent management system. The information processing apparatus 10 reads the examiner code from the worksheet 60 and checks whether the argument case information 90 of the corresponding examiner code is stored. In a case where the argument case information 90 is stored, the information processing apparatus 10 can add a storage location and a file name of the argument case information 90 to the item of "link to argument case information" in the worksheet 60 to obtain a worksheet 60A shown in Fig. 10. The information processing apparatus 10 checks whether a file name "1234.xlsx" related to the examiner code "1234" is present in the storage unit 13. In a case where the presence is checked, the information processing apparatus 10 adds the link destination to the storage unit 13 and the file name "1234.xlsx" to the item of "link to argument case information". In a case where the file name "1234.xlsx" is described, the user can directly access the existing argument case information 90 (file name: 1234.xlsx) from the worksheet 60A without waiting for the creation of the argument case information 90. On the other hand, in a case where the file name related to the examiner code "1235" cannot be checked, the information processing apparatus 10 creates the argument case information 90 as described above. In a case where a new file (1235.xlsx) is created from the argument case information 90, the link destination and the file name "1235.xlsx" may be added to the item of "link to argument case information". Even in a case where the existing argument case information 90 is present, the new argument case information 90 may be regularly generated. As a result, the latest argument case information 90 can be obtained.

A case where the argument case information 90 includes "application number", "examiner name", "interim record (application-registered)", "presence or absence of written argument", "presence or absence of amendment", "provisions of reasons for rejection", and "link information" has been described. The argument case information may further include the content of the argument and the summary of argument.

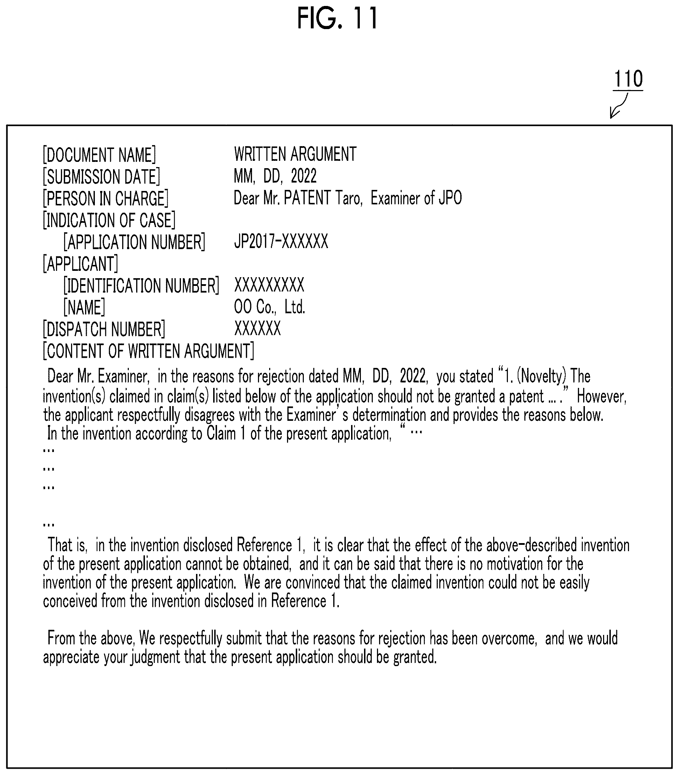

Fig. 11 is an example of a written argument 110 in which the content of the argument is described. In the written argument 110, it is stated that "That is, in the invention disclosed Reference 1, it is clear that the effect of the above-described invention of the present application cannot be obtained, and it can be said that there is no motivation for the invention of the present application. We are convinced that the claimed invention could not be easily conceived from the invention disclosed in Reference 1." based on the difference in action between the invention described in claim 1 and the invention described in Reference 1. No amendment has been submitted in response to the reasons for rejection.

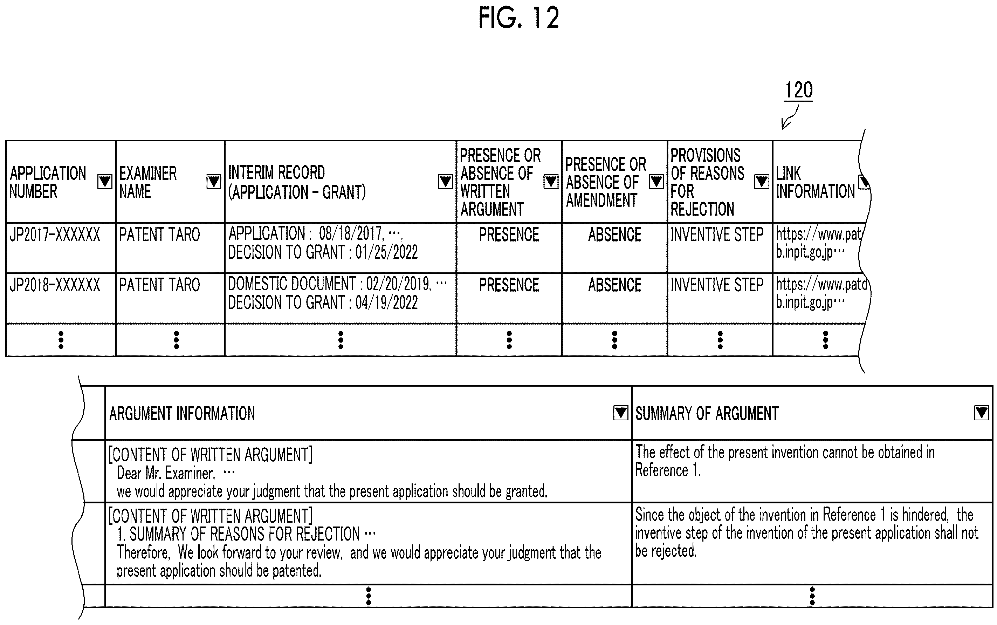

Fig. 12 is a diagram showing another argument case information 120 including "content of argument" and "summary of argument". In the argument case information 120 shown in Fig. 12, the entire text of the written argument 110 shown in Fig. 11 is described in the "content of argument" of the first row. In addition, in the "content of argument" of the second row, the entire text of the written argument different from the written argument 110 shown in Fig. 11 is described. In a case where the argument case information 120 includes the content of argument, the user can check the content of the argument without accessing the patent office system DB 34 or the commercial system DB 35.

In addition, the argument case information 120 includes an item of "summary of argument", and a summary of the content of the argument of the written argument is described. In "summary of argument" in Fig. 12, the main reasons of argument are extracted from the "content of argument" and described. The summary creation unit 45 of the processor 11 can create "summary of argument" from the "content of argument". The user can register a term (a hindering factor, an effect of the invention, or the like) in advance in the summary creation unit 45, and the summary creation unit 45 can create "summary of argument" by selecting a character string including the term. Alternatively, a machine learning model in which a summary of past arguments is used as a training model may be implemented in the summary creation unit 45, and the summary creation unit 45 may create the "summary of argument" from the "content of argument" by using the machine learning model. The user may create the "summary of argument". In a case where the user creates the "summary of argument", the specific user may be granted the authority to create the "summary of argument". As a result, the quality of the "summary of argument" can be maintained.

Although the examples of the argument case information 90 and 120 have been described, the argument case information need only include at least one piece of information of past identification information including at least one of an application number, a publication number, or a patent number, argument information, withdrawn reasons for rejection information, or link information to information in which progress information of the past applications is accessible. As long as at least one of these pieces of information is included, the user can check the content of the specific application.

One processing unit constituting the information processing apparatus 10 may be composed of one of the various processors or two or more processors of the same type or different types. For example, one processing unit may be configured with a plurality of FPGAs or a combination of a CPU and an FPGA. In addition, a plurality of processing units may be configured with one processor. As an example of configuring a plurality of processing units by one processor, first, as represented by a computer, such as a client or a server, there is a form in which one processor is configured by a combination of one or more CPUs and software and this processor functions as a plurality of processing units. Second, as represented by a system on chip (SoC) or the like, there is a form of using a processor that implements, by one integrated circuit (IC) chip, functions of the entire system including the plurality of processing units. As described above, the various processing units are configured using one or more of the various processors as a hardware structure. Furthermore, the hardware structure of the various processors is, more specifically, an electric circuit (circuitry) in which circuit elements such as semiconductor elements are combined with each other.

In addition, the present invention includes the information processing program that is installed on a computer to cause the computer to function as the information processing apparatus according to the embodiment of the present invention and a non-volatile storage medium in which the information processing program is recorded.

Furthermore, the present invention is not limited to the above-described embodiments, and various modifications can be made without departing from the spirit of the present invention.

### Explanation of References

10: information processing apparatus
11: processor
12: memory
13: storage unit
14: input/output interface
15: display
16: operation input unit
20: organization
21: LAN
22: personal computer
30: network
31: patent office
32: applicant
33: patent law firm
34: patent office system DB
35 commercial system DB
40: reception unit
41: person-in-charge extraction unit
42: specific application extraction unit
43: argument case information generation unit
44: output unit
45: summary creation unit
50: notice of reasons for rejection
51: application number
52: examiner name
53: examiner code
54: organization code
55: applied provisions
56: reasons
57: reference
58: dispatch date
60: worksheet
60A: worksheet
80: worksheet
90: argument case information
110: written argument
120: argument case information

## Claims

1. An information processing apparatus comprising a processor,
wherein the processor
receives person-in-charge information of a person in charge who has performed examination of a certain application, person-in-charge information for specifying a person in charge who has performed examination of an application relating to an intellectual property right for which a notice of rejection has been received, or identification information for specifying the application relating to the intellectual property right for which the notice of rejection has been received,
extracts the person-in-charge information for specifying the person in charge who has performed examination of the application relating to the intellectual property right for which the notice of rejection has been received based on the identification information in a case where the identification information has been received, and
generates argument case information related to a specific application that has been granted only by argument without amendment or correction of translation errors for a notice of reasons for rejection immediately before the grant among past applications for which the person in charge has performed examination based on the person-in-charge information.

2. The information processing apparatus according to claim 1,
wherein the argument case information includes at least one piece of information of past identification information including at least one of an application number, a publication number, or a patent number, argument information, withdrawn reasons for rejection information, or link information to information in which progress information of the past applications is accessible.

3. The information processing apparatus according to claim 2,
wherein the processor creates a summary of argument from the argument information.

4. The information processing apparatus according to any one of claims 1 to 3,
wherein the processor outputs the argument case information.

5. The information processing apparatus according to any one of claims 1 to 3,
wherein the processor specifies the specific application from progress information of the past applications.

6. An information processing method executed by an information processing apparatus including a processor, the information processing method comprising:
via the processor,
receiving person-in-charge information of a person in charge who has performed examination of a certain application, person-in-charge information for specifying a person in charge who has performed examination of an application relating to an intellectual property right for which a notice of rejection has been received, or identification information for specifying the application relating to the intellectual property right for which the notice of rejection has been received,
extracting the person-in-charge information for specifying the person in charge who has performed examination of the application relating to the intellectual property right for which the notice of rejection has been received based on the identification information in a case where the identification information has been received, and
generating argument case information related to a specific application that has been granted only by argument without amendment or correction of translation errors for a notice of reasons for rejection immediately before the grant among past applications for which the person in charge has performed examination based on the person-in-charge information.

7. An information processing program for causing a computer to execute the information processing method according to claim 6.

8. A non-transitory computer-readable recording medium on which the program according to claim 7 is recorded.
